# FASCICULE DE BREVET EUROPEEN

(11) **EP 1 722 929 B1**
(45) Date de publication et mention de la délivrance du brevet: **29.04.2009**
(21) Numéro de dépôt: 04718985.7
(22) Date de dépôt: 10.03.2004
(51) Int. Cl.: B25B 13/44, B25B 23/10

(54) **EMBOUT DE PREHENSION ET DE SERRAGE DESTINE A EQUIPER UN APPAREIL DE VISSAGE**
GREIFKLEMMENDE FÜR EINE SCHRAUBVORRICHTUNG
GRASPING CLAMPING END FOR A SCREWING DEVICE

(43) Date de publication de la demande: 22.11.2006
(73) Titulaire: Ateliers LR Etanco, 78230 Le Pecq (FR)
(72) Inventeur: LEMONTEY, Michel, F-78580 Maule (FR)
(74) Mandataire: de Saint-Palais, Arnaud Marie
(86) Numéro de dépôt international: PCT/FR2004/000566
(87) Numéro de publication internationale: WO 2005/097410

(56) Documents cités:
- EP-A- 1 382 418
- US-A- 3 379 231
- US-A- 3 758 938
- US-B1- 6 240 811
- US-B1- 6 360 635

## Description

La présente invention concerne un embout de préhension et de vissage destiné à équiper un appareil de vissage tel que, par exemple, une visseuse/dévisseuse motorisée. Un embout de préhension et de vissage tel que décrit dans le préambule de la revendication 1 est connu de l'art antérieur par exemple par le document EP 1 382 418.

Elle s'applique au vissage de vis pouvant présenter de multiples formes et tout particulièrement, mais non exclusivement, à des vis dont la tête présente à sa périphérie des conformations destinées à coopérer avec un outil de vissage pour exercer sur la vis un couple de vissage et une portion sous-tête cylindrique dont le diamètre est inférieur à celui de la tête mais supérieur à celui de la tige filetée de la vis.

Ce type de vis est spécialement conçu pour un embout de vissage comprenant une douille apte à être entraînée en rotation et présentant, à l'une de ses extrémités, une cavité coaxiale s'ouvrant à l'extérieur de manière à pouvoir recevoir la tête de la vis. La surface intérieure de la douille qui délimite cette cavité présente des conformations aptes à venir en prise avec celle de la tête de la vis, de manière à pouvoir assurer la transmission du couple de vissage. Cet embout est muni de moyens de préhension qui s'engagent dans l'espace compris entre les deux épaulements, lors de l'introduction de la tête de la vis à l'intérieur de l'embout jusqu'à venir en butée contre la portion cylindrique sous-tête en fin d'engagement.

Grâce à ces dispositions, la fonction d'entraînement en rotation est assurée séparément de la fonction de préhension.

De ce fait, les moyens de préhension qui n'ont plus de fonction d'entraînement en rotation peuvent présenter des dimensions réduites sans pour autant perdre de l'efficacité.

Les moyens de centrage peuvent être assurés à la fois par la douille et par les moyens de préhension : Cette disposition permet d'utiliser des vis à têtes relativement plates qui risqueraient de rotuler légèrement dans un embout de vissage classique.

Dans ce cas, l'action des moyens de préhension sur la partie cylindrique sous-tête vient confirmer ce centrage en fin d'introduction de la vis dans la douille.

La Demanderesse a déjà proposé (demande de brevet EP 1 382 418) une douille de vissage de ce type comprenant un noyau coaxial, fixe par rapport à la douille, qui s'étend dans la susdite cavité de manière à délimiter, à l'intérieur de celle-ci, un volume antérieur sensiblement cylindrique à l'intérieur duquel peut s'introduire la tête de la vis et un volume annulaire dans lequel sont montés axialement mobiles des mors munis d'éléments de préhension qui s'engagent dans le volume antérieur de la douille.

Le noyau comprend successivement une partie antérieure cylindrique, une partie centrale cylindrique de plus faible diamètre et une partie arrière allant en s'évasant vers l'arrière de manière à constituer une rampe.

Les mors présentent, au voisinage de leur extrémité arrière, une face extérieure munie d'une gorge dans laquelle s'engage un jonc élastique et une face intérieure oblique destinée à coopérer avec la partie arrière du noyau de manière à provoquer, lors d'un déplacement axial des mors vers l'arrière, un basculement des mors provoquant leur fermeture.

Il s'avère que cette solution qui convient bien pour des vis de faible longueur (quelques centimètres) n'est pas totalement efficace pour des vis de plus grande longueur (10 cm ou plus).

En effet, ces vis de plus grande longueur sont fréquemment soumises à des efforts transversaux qui, en raison de la longueur, engendrent des couples relativement importants au niveau de la tête de la vis.

Ces couples ont pour effet d'engendrer sur les mors opposés, d'un côté, un effort de traction axiale vers l'extérieur et, de l'autre côté, un effort de repoussement vers l'arrière de la douille. Compte tenu du fait que les mors ne sont solidarisés les uns aux autres que par un jonc élastique, ces efforts produiront, au-delà d'un certain seuil, un décalage axial des mors et un effet de rotule pouvant conduire jusqu'au désengagement de la tête de la vis.

L'invention a donc plus particulièrement pour but de supprimer cet inconvénient de manière à assurer une meilleure rétention aussi bien des vis de petites dimensions que des vis présentant une longueur importante.

L'invention parvient à ce résultat au moyen d'un embout de préhension et de vissage d'une vis comprenant une douille présentant, à l'une de ses extrémités, une cavité coaxiale et un noyau coaxial fixe par rapport à la douille qui s'étend coaxialement à ladite cavité en délimitant, avec celle-ci, un volume antérieur sensiblement cylindrique à l'intérieur duquel peut s'introduire la tête de la vis et un volume annulaire dans lequel sont montés des mors axialement mobiles munis d'éléments de préhension qui s'engagent dans le volume antérieur de la douille.

Selon l'invention, les mors sont montés basculants et retenus axialement sur un manchon tubulaire grâce à des moyens d'articulation, ce manchon tubulaire étant mobile axialement sur le noyau de manière à pouvoir passer d'une position fin de course avant dans laquelle les mors sont à l'état déployé sous l'effet de moyens élastiques à une position fin de course arrière dans laquelle les mors sont amenés et maintenus en position fermée grâce à la coopération d'une conformation des mors avec une conformation appropriée de la douille ou du noyau qui entraîne le basculement des mors autour des moyens d'articulation, le retour en position fin de course avant du manchon provoquant ensuite le passage des mors en position ouverte.

Avantageusement, les mors pourront consister en des tiges présentant, dans leur partie antérieure, une encoche dans laquelle la bordure périphérique de la tête de la vis peut venir s'engager en position fermée et, au voisinage de leur extrémité arrière, une face extérieure munie d'une gorge dans laquelle s'engage un jonc élastique. La face extérieure de ces mors pourra comprendre, de préférence dans sa partie antérieure, une portion oblique par rapport à l'axe longitudinal de l'embout, cette portion oblique constituant une rampe coopérant avec le bord antérieur de l'orifice de la douille pour provoquer le basculement des mors en position fermée.

La douille pourra avantageusement comprendre, dans le fond de la cavité, un évasement annulaire dans lequel le jonc pourra partiellement s'engager après déformation élastique pour verrouiller l'ensemble mobile constitué par le manchon tubulaire et les mors en position fin de course arrière, les mors étant alors en position fermée. Le déverrouillage n'est ensuite obtenu qu'en exerçant sur les mors une traction axiale d'une amplitude suffisante pour que le jonc, en se déformant élastiquement, puisse échapper à l'évasement.

Le noyau pourra, quant à lui, présenter une forme cylindrique étagée comportant une portion cylindrique sur laquelle coulisse le manchon tubulaire, cette portion cylindrique étant limitée, d'un côté, par un épaulement qui constitue le fond de la cavité et, de l'autre côté, par une portion cylindrique de plus grand diamètre (qui peut consister en la tête d'une vis venant se visser dans un perçage axial taraudé réalisé dans le noyau).

Bien entendu, la surface intérieure de la douille pourra comprendre des conformations aptes à venir en prise avec des conformations correspondantes de la tête de la vis que l'on désire visser. Cette surface pourra en outre comprendre des gorges axiales servant au guidage des mors.

Des modes d'exécution de l'invention seront décrits ci-après, à titre d'exemples non limitatifs, avec référence aux dessins annexés dans lesquels :
Les figures 1 à 3 sont des vues respectivement en coupe axiale, en vue de côté et en vue de dessus d'une tête de vis utilisable avec un embout de vissage selon l'invention ;
Les figures 4 et 5 sont des vues en perspective de la vis illustrée sur les figures 1 à 3 ;
La figure 6 est une vue en perspective d'un embout de vissage selon l'invention, en position de vissage ;
La figure 7 est une coupe axiale de l'embout de vissage représenté figure 6 ;
La figure 8 est une vue de devant de la douille ;
La figure 9 est une vue en demi-coupe partielle à plus grande échelle de l'embout représenté figures 6 et 7 ;
La figure 10 est une demi-coupe partielle analogue à celle de la figure 9 mais en position ouverte des mors ;
La figure 11 est une vue en élévation de l'ensemble tige/fond/noyau de l'embout représenté figures 6 à 9 ;
Les figures 12 et 13 montrent le tronçon tubulaire axialement mobile de la douille en perspective (figure 12) et en coupe axiale (figure 13) ;
La figure 14 est une vue en perspective d'un mors ;
La figure 15 est une coupe axiale d'une variante d'exécution de l'embout selon l'invention.

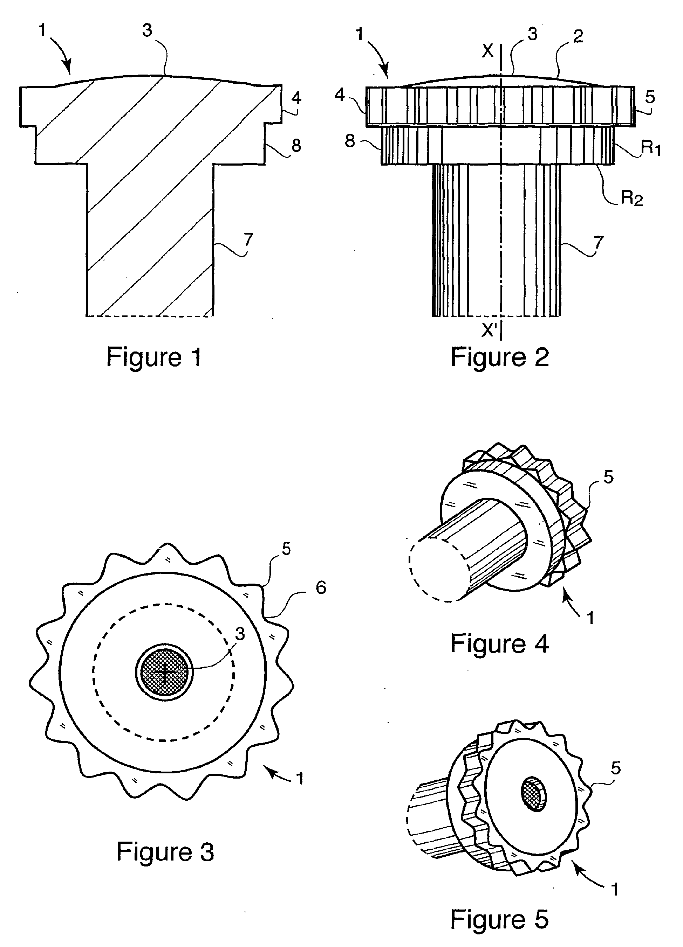

Dans l'exemple représenté sur les figures 1 à 5, seule la tête de la vis a été représentée avec seulement le départ de la tige, étant entendu que l'invention ne se limite pas à un type de vis particulier. Ainsi, cette vis pourrait présenter un filet de type classique ou un filet autotaraudeur terminé par une pointe autoperforante.

Cette tête de vis 1 présente une face supérieure bombée 2 avec au centre une cuvette d'injection 3. La présence de cette cuvette n'existe que dans le cas où la tête est surmoulée. Par contre, dans le cas d'un forgeage à froid (roulage), la face supérieure de la tête sera continûment bombée. Le bord périphérique 4 de la tête 1 est dentelé et comprend ici quinze dents 5 séparées par des échancrures 6 formant un angle d'environ 120°.

Cette tête 1 est reliée à une tige coaxiale 7 par l'intermédiaire d'une portion cylindrique sous-tête 8 dont le diamètre est sensiblement égal à la distance entre le fond des échancrures et l'axe X, X' de la vis. Dans cet exemple, la hauteur de la portion cylindrique 8 est sensiblement égale à la hauteur du bord périphérique 4 de la tête 1. Le diamètre de la tige 7 de la vis, au niveau de son raccordement à la portion cylindrique 8, est très inférieur à celui de la tête 1 (environ 50 %), le raccord entre la portion cylindrique 8 avec le bord périphérique 4 de la tête 1 et avec l'extrémité de la tige 7, s'effectuant grâce à des épaulements radiaux R₁, R₂.

Bien entendu, cette vis pourra être vissée à l'aide d'un outil à main présentant un embout tubulaire dont le profil intérieur correspond à la forme extérieure dentelée de la tête 1.

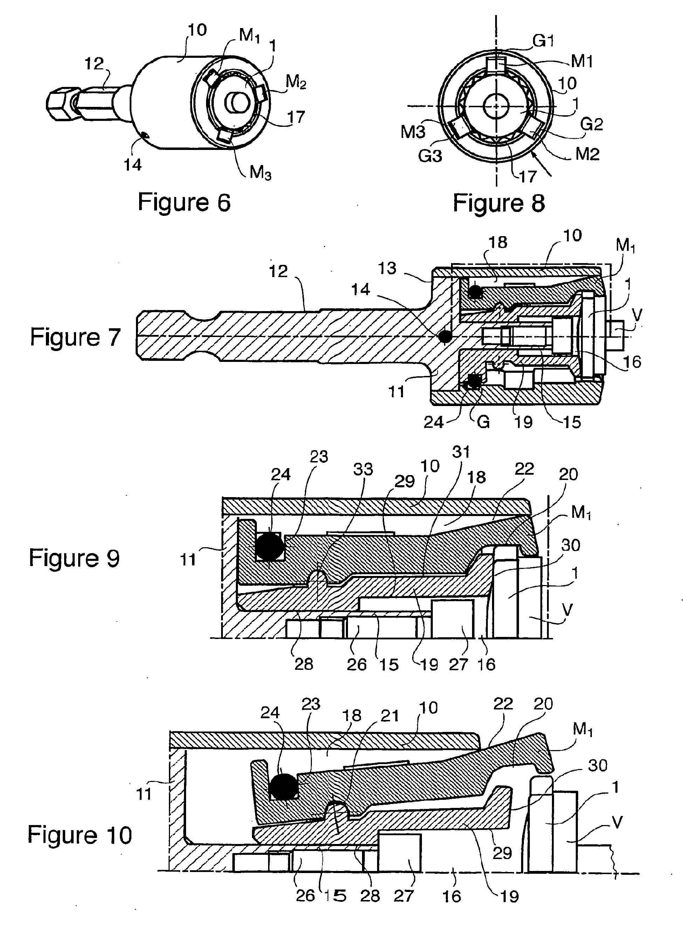

Néanmoins, elle convient tout particulièrement à l'embout de vissage illustré sur les figures 6 à 14 qui comprend essentiellement une douille tubulaire 10 refermée d'un côté par un fond 11 circulaire solidaire d'une tige 12 coaxiale partiellement de section hexagonale, destinée à s'engager dans le mandrin d'une visseuse.

Le fond 11 présente une forme circulaire et comporte, à sa périphérie, trois crabots 13 à 120° l'un de l'autre qui s'étendent radialement en saillie.

Le diamètre extérieur du fond 11 est sensiblement égal au diamètre intérieur de la douille 10.

La douille 10 comporte trois gorges axiales G₁ à G₃ à 120° l'une de l'autre dans lesquelles s'engagent respectivement les crabots 13.

La fixation en position de la douille 10 et du fond 11 est assurée au moyen d'une goupille 14 qui s'engage dans un perçage radial passant au travers dudit fond 11 et de ladite douille 10.

La douille 10 présente, du côté opposé au fond, une cavité coaxiale dans laquelle s'étend un noyau cylindrique coaxial 15 qui délimite, dans cette cavité coaxiale, deux chambres successives, à savoir :
- une première chambre 16 destinée notamment à recevoir la tête 1 de la vis, cette chambre 16 présentant une section à profil dentelé (denture 17) sensiblement complémentaire à celui de la tête 1 de la vis,
- une chambre annulaire 18 dans laquelle sont disposés des mors axialement mobiles M₁ - M₃ munis d'éléments de préhension (mâchoires) qui s'engagent dans la chambre 16.

Ces mors M₁ - M₃ sont montés basculants et sont retenus axialement sur un manchon tubulaire 19 grâce à des moyens d'articulation. Ils comprennent :
- d'une part, une face inférieure comprenant dans sa partie antérieure une encoche 20 dans laquelle la bordure périphérique de la vis 1 peut venir s'engager et, à une distance prédéterminée de leur extrémité postérieure, une encoche circulaire 21 constituant une première partie des moyens d'articulation et,
- d'autre part, une face supérieure dont la partie antérieure 22 est oblique et constitue un profil de came et une partie postérieure comprenant une encoche 23 par laquelle s'engage un jonc annulaire élastique 24 coaxial à l'embout.

Dans ces exemples, le noyau 15 présente une forme cylindrique et est muni d'un alésage taraudé coaxial dans lequel vient se visser une vis 26 dont la tête, cylindrique, 27, présente un diamètre supérieur à celui de la forme cylindrique du noyau 15.

Le manchon tubulaire 19 comprend, quant à lui, une surface intérieure présentant une forme cylindrique étagée dont une première partie 28 (postérieure) présente un diamètre sensiblement égal à celui de la forme cylindrique du noyau 15 tandis qu'une deuxième partie 29 (antérieure) présente un diamètre sensiblement égal au diamètre de la tête de la vis 26.

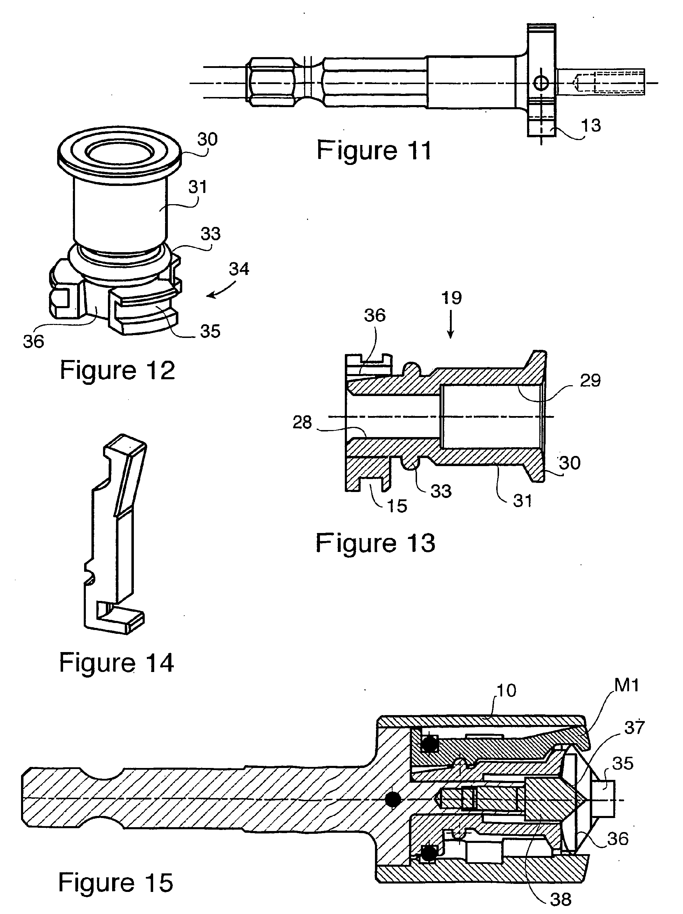

Comme illustré figures 12 et 13, la surface extérieure de ce manchon tubulaire 19 comprend, en partant de sa face antérieure, un collet 30 suivi d'une première partie sensiblement cylindrique 31, d'une seconde partie cylindrique de diamètre inférieur à la première munie d'une excroissance annulaire 33 et, enfin, d'une partie cylindrique postérieure 34 de plus grand diamètre, munie d'une gorge annulaire 35 et divisée en trois secteurs par trois échancrures axiales 36 respectives à fond oblique convergeant vers l'axe de l'embout, en direction de son extrémité postérieure.

Grâce à ces dispositions, les mors M₁ à M₃ s'engagent sur le manchon tubulaire, à 120° les uns des autres, dans une position selon laquelle leurs parties postérieures s'engagent dans une échancrure respective 36 tandis que l'excroissance annulaire du manchon 33 s'engage dans leurs encoches 21 (figure 10) en réalisant ainsi une charnière permettant aux mors M₁ à M₃ de basculer dans des plans axiaux tout en étant retenus axialement sur le manchon tubulaire 19. Ce basculement est autorisé en raison des dégagements des fonds des échancrures 36.

Compte tenu de cette structure, le manchon tubulaire 19 peut se déplacer entre :
- une position fin de course avant dans laquelle les mors M₁ à M₃ s'étendent au-delà de l'ouverture de la douille tubulaire 10, dans une position ouverte due à l'action du jonc annulaire élastique 24 et au profil de came de la face extérieure 22 des mors, et
- une position fin de course arrière dans laquelle les mors M₁ à M₃ sont sensiblement rentrés à l'intérieur de la douille 10 et se trouvent resserrés les uns vers les autres en raison de l'action de la douille 10 sur le profil de came 22 contre l'action engendrée par le jonc élastique 24.

Comme précédemment mentionné, la face intérieure de la douille 10 comprend, au voisinage du fond, une gorge annulaire G dans laquelle vient s'engager le jonc 24 lorsque le manchon tubulaire 19 se trouve en position fin de course arrière.

Grâce à ces dispositions, en position déployée, les extrémités des mors M₁ à M₃ ressortent de la douille 10 et sont orientées radialement vers l'extérieur de manière à ce que les encoches 20 soient suffisamment espacées les unes des autres pour recevoir la tête 1 de la vis. Le collet 30 situé à l'extrémité antérieure du manchon tubulaire 19 se trouve alors en avant de la tête 1 de la vis V.

Ainsi, lors de l'introduction de la tête 1 de la vis V à l'intérieur de la cavité de la douille 10, les mors M₁ à M₃ étant en position ouverte, la face antérieure de la tête 1 vient porter sur le collet 30 et repousser vers l'arrière l'ensemble mobile comprenant le manchon tubulaire 19, les mors M₁ à M₃ et le jonc 24. Au cours de ce déplacement, les mors M₁ à M₃ se referment en raison de l'action de la bordure antérieure de la douille 10 sur les parties obliques 22 de la face supérieure desdits mors M₁ à M₃ en emprisonnant la tête 1 de la vis V.

En fin de course, les extrémités arrière du manchon tubulaire 19 et des mors M₁ à M₃ viennent en butée contre le fond 11. Dans cette position, l'arête supérieure située à l'extrémité antérieure des mors M₁ à M₃ se trouve engagée en appui sur la face intérieure de la cavité de la douille 10 tandis que les extrémités inférieures des mors M₁ à M₃ viennent porter sur la partie cylindrique sous-tête 8 de la vis V. Le jonc 24 se trouve alors partiellement engagé dans la gorge G et assure un blocage axial temporaire de l'ensemble mobile dans la cavité du manchon tubulaire 10.

Dans cette position, un effort transversal appliqué sur la tige de la vis se trouve repris par la douille 10 par l'intermédiaire des extrémités des mors M₁ à M₃ tandis que ces derniers se trouvent axialement retenus sur le manchon tubulaire 19 grâce à l'engagement de la protubérance annulaire 33 dans l'encoche 21.

Par ailleurs, compte tenu du fait que l'ensemble mobile se trouve en butée contre le fond 11, seul un déplacement vers l'avant est possible à condition toutefois que l'effort de traction exercé dépasse un seuil prédéterminé pour lequel le jonc élastique 24, en se comprimant, échappe à la gorge G.

Dans ce cas, la traction exercée par la vis provoque un déplacement de l'ensemble mobile vers l'avant avec ouverture simultanée des mors M₁ à M₃ sous l'effet de l'action du jonc élastique 24. En fin de course avant de l'ensemble mobile, la tête 1 de la vis peut être dégagée des mors M₁ à M₃.

Bien entendu, lorsque la tête 1 de la vis se trouve emprisonnée à l'intérieur de la douille 10, le profil dentelé de la douille 10 est en prise avec celui de la tête 1 de manière à pouvoir lui transmettre un couple de vissage. L'entraînement en rotation de la vis est directement assuré par la douille 10. De ce fait, on utilise de façon optimale la forme tubulaire de cette douille pour assurer la transmission du couple de vissage.

Un autre avantage de cette solution consiste en ce que, lors du vissage de la vis, les efforts axiaux engendrés sur la tige 12, en direction de la vis, sont directement répercutés sur la tête de cette vis. Ainsi, cet embout est utilisable notamment pour le vissage de vis autoperforantes à percussion dans un matériau tel que, par exemple, du béton cellulaire.

L'embout peut être facilement adapté pour le vissage d'une vis 35 dont la tête 36 présente, à sa périphérie, un bord circulaire et, dans sa partie centrale, une empreinte 37 (par exemple cruciforme) permettant son entraînement en rotation.

Dans ce cas, la vis 38 prévue à l'extrémité du noyau pourra comprendre une tête présentant une forme complémentaire à celle de l'empreinte convexe 37 de la vis 35 ; la douille 10 présentera un profil lisse à la place du profil dentelé et l'encoche des mors M₁ à M₃ présentera une portion conique apte à venir en prise avec la face conique sous-tête de la vis 35 (figure 15).

## Revendications

1. Embout de préhension et de vissage d'une vis (1) comprenant une douille (10) présentant, à l'une de ses extrémités, une cavité coaxiale et un noyau coaxial (15) fixe par rapport à la douille (10) qui s'étend coaxialement à ladite cavité en délimitant, avec celle-ci, un volume antérieur (16) sensiblement cylindrique à l'intérieur duquel peut s'introduire la tête de la vis (1) et un volume annulaire (18) dans lequel sont montés des mors axialement mobiles (M₁ à M₃) munis d'éléments de préhension qui s'engagent dans le volume antérieur (16) de la douille (10),
**caractérisé en ce que** les mors (M₁ à M₃) sont montés basculants et retenus axialement sur un manchon tubulaire (19) grâce à des moyens d'articulation (33), ce manchon tubulaire (19) étant mobile axialement sur le noyau (15) de manière à pouvoir passer d'une position fin de course avant dans laquelle les mors (M₁ à M₃) sont à l'état déployé sous l'effet de moyens élastiques (24) à une position fin de course arrière dans laquelle les mors (M₁ à M₃) sont amenés et maintenus en position fermée grâce à la coopération d'une conformation des mors (M₁ à M₃) avec une conformation appropriée de la douille (10) ou du noyau (15) qui entraîne le basculement des mors (M₁ à M₃) autour des moyens d'articulation (33), le retour en position fin de course avant du manchon (19) provoquant ensuite le passage des mors en position ouverte.

2. Embout selon la revendication 1,
**caractérisé en ce que** les mors (M₁ à M₃) consistent en des tiges présentant, dans leur partie antérieure, une encoche (20) dans laquelle la bordure périphérique de la tête de la vis (1) peut venir s'engager en position fermée et, au voisinage de leur extrémité arrière, une face extérieure munie d'une gorge (23) dans laquelle s'engage un jonc élastique (24).

3. Embout selon l'une des revendications 1 et 2,
**caractérisé en ce que** la face extérieure des mors (M₁ à M₃) comprend dans sa partie antérieure, une portion oblique (22) par rapport à l'axe longitudinal de l'embout, cette portion oblique (22) constituant une rampe coopérant avec le bord antérieur de l'orifice de la douille (10) pour provoquer le basculement des mors (M₁ à M₃) en position fermée.

4. Embout selon l'une des revendications précédentes,
**caractérisé en ce que** la douille (10) comprend dans le fond de la cavité, un évasement annulaire (G) dans lequel le jonc (24) peut partiellement s'engager après déformation élastique pour verrouiller l'ensemble mobile constitué par le manchon tubulaire (19) et les mors (M₁ à M₃) en position fin de course arrière, les mors (M₁ à M₃) étant alors en position fermée, le déverrouillage n'étant ensuite obtenu qu'en exerçant sur les mors (M₁ à M₃) une traction axiale d'une amplitude suffisante pour que le jonc (24), en se déformant élastiquement, puisse échapper à l'évasement (G).

5. Embout selon l'une des revendications précédentes,
**caractérisé en ce que** le noyau (15) présente une forme cylindrique étagée comportant une portion cylindrique (31) sur laquelle coulisse le manchon tubulaire (19), cette portion cylindrique (31) étant limitée, d'un côté, par un épaulement qui constitue le fond (11) de la cavité et, de l'autre côté, par une portion cylindrique de plus grand diamètre (27).

6. Embout selon la revendication 5,
**caractérisé en ce que** la portion de plus grand diamètre (27) consiste en la tête d'une vis (26) venant se visser dans un perçage axial taraudé réalisé dans le noyau (15).

7. Embout selon l'une des revendications précédentes,
**caractérisé en ce que** la surface intérieure de la douille (10) comprend des conformations (17) aptes à venir en prise avec des conformations correspondantes de la tête de la vis (1) que l'on désire visser.

8. Embout selon l'une des revendications précédentes,
**caractérisé en ce que** la surface intérieure de la douille (10) comprend des gorges axiales servant au guidage des mors (M₁ à M₃).

9. Embout selon la revendication 8,
**caractérisé en ce que** la douille (10) est refermée d'un côté par un fond (11) solidaire d'une tige coaxiale (12) destinée à s'engager dans le mandrin d'une visseuse, ce fond comprenant des crabots qui s'engagent dans les susdites gorges.

10. Embout selon la revendication 5,
**caractérisé en ce que** la portion de plus grand diamètre du noyau (15) est conformée de manière à venir en prise avec une empreinte (37) formée sur la tête de vis (35).

## Claims

1. End fitting for gripping and screwing a screw (1) comprising a bushing (10) having, at one of the ends thereof, a coaxial cavity and a fixed coaxial core (15) with respect to the bushing (10) which extends coaxially to said cavity delimiting, therewith, a substantially cylindrical front volume (16) inside which the head of the screw (1) may be introduced and an annular volume (18) wherein axially mobile jaws (M₁ to M₃) equipped with gripping members which are engaged in the front volume (16) of the bushing (10) are mounted,
**characterised in that** the jaws (M₁ to M₃) are mounted tilting and retained axially on a tubular sleeve (19) by means of articulation means (33), said tubular sleeve (19) being axially mobile on the core (15) so as to be able to change from a front limit position wherein the jaws (M₁ to M₃) are in the deployed state under the effect of resilient means (24) to a rear limit position wherein the jaws (M₁ to M₃) are moved to and held in a closed position by means of the cooperation of a conformation of the jaws (M₁ to M₃) with a suitable conformation of the bushing (10) or the core (15) which causes the tilting of the jaws (M₁ to M₃) about the articulation means (33), the return to the front limit position of the sleeve (19) subsequently causing the jaws to change to the open position.

2. End fitting according to claim 1, **characterised in that** the jaws (M₁ to M₃) consist of rods having, in the front part thereof, a notch (20) wherein the peripheral edge of the head of the screw (1) may be engaged in the closed position and, in the vicinity of the rear end thereof, an outer face equipped with a groove (23) wherein a resilient ring (24) is engaged.

3. End fitting according to any of claims 1 and 2, **characterised in that** the outer face of the jaws (M₁ to M₃) comprises in the front part thereof, an oblique portion (22) with respect to the longitudinal axis of the end fitting, said oblique portion (22) forming a ramp cooperating with the front edge of the orifice of the bushing (10) to cause the tilting of the jaws (M₁ to M₃) in the closed position.

4. End fitting according to any of the above claims, **characterised in that** the bushing (10) comprises in the base of the cavity, an annular bell mouth (G) wherein the ring (24) may partially be engaged after resilient deformation to lock the mobile assembly consisting of the tubular sleeve (19) and the jaws (M₁ to M₃) in the rear limit position, the jaws (M₁ to M₃) being in this case in the closed position, unlocking only being obtained by applying on the jaws (M₁ to M₃) an axial traction of a sufficient amplitude so that the ring (24), being deformed resiliently, can escape the bell mouth (G).

5. End fitting according to any of the above claims, **characterised in that** the core (15) has a staged cylindrical shape comprising a cylindrical portion (31) whereon the tubular sleeve (19) slides, said cylindrical portion (31) being limited, on one side, by a shoulder forming the base (11) of the cavity and, on the other, by a cylindrical portion of greater diameter (27).

6. End fitting according to claim 5, **characterised in that** the portion of greater diameter (27) consists of the head of a screw (26) screwed into a threaded axial holes produced in the core (15).

7. End fitting according to any of the above claims, **characterised in that** the inner surface of the bushing (10) comprises conformations (17) capable of engaging with the corresponding conformations of the head of the screw (1) to be screwed.

8. End fitting according to any of the above claims, **characterised in that** the inner surface of the bushing (10) comprises axial grooves used to guide the jaws (M₁ to M₃).

9. End fitting according to claim 8, **characterised in that** the bushing (10) is closed on one side by a base (11) attached to a coaxial rod (12) intended to be engaged in the chuck of a screw driving machine, said base comprising jaw couplings which are engaged in said grooves.

10. End fitting according to claim 5, **characterised in that** the portion of greater diameter of the core (15) is conformed so as to engage with a recess (37) formed on the screw head (35).

## Patentansprüche

1. Greif- und Verschraubungsaufsatz für eine Schraube (1) umfassend eine Hülse (10), die, an einem ihrer Enden, einen koaxialen Hohlraum und einen bezüglich der Hülse (10) unbeweglichen koaxialen Kern (15) aufweist, der sich koaxial zu dem Hohlraum erstreckt und mit diesem ein vorausgehendes, im Wesentlichen zylindrisches Volumen (16) begrenzt, in dessen Inneres sich der Kopf der Schraube (1) einschieben kann, und ein ringförmiges Volumen (18), in dem axial bewegliche Backen (M₁ bis M₃) montiert sind, die mit Greifelementen versehen sind, die in das vorausgehende Volumen (16) der Hülse (10) eingreifen,
**dadurch gekennzeichnet, dass** die Backen (M₁ bis M₃) klappbar und axial aufgesetzt auf eine röhrenförmigen Manschette (19) mit Hilfe von Dreheinrichtungen (33) montiert sind, wobei diese röhrenförmige Manschette (19) auf dem Kern (15) axial beweglich ist, derart, dass sie von einer Vorwärtslauf-Endposition, in der sich die Backen (M₁ bis M₃) unter der Wirkung von elastischen Mitteln (24) im ausgefahrenen Zustand befinden, in eine Rückwärtslauf-Endposition übergehen können, in der die Backen (M₁ bis M₃) in Position gebracht sind und, mit Hilfe des Zusammenwirkens einer Ausgestaltung der Backen (M₁ bis M₃) mit einer geeigneten Ausgestaltung der Hülse (10) oder des Kerns (15), der das Ausklappen der Backen (M₁ bis M₃) um die Gelenkeinrichtungen (33) auslöst, in geschlossener Position gehalten werden, wobei die Rückkehr in die Vorwärtslauf-Endposition der Manschette (19) anschließend den Übergang der Backen in die geöffnete Position herbeiführt.

2. Aufsatz nach Anspruch 1,
**dadurch gekennzeichnet, dass** die Backen (M₁ bis M₃) aus Stiften bestehen, die in ihrem vorderen Teil eine Aussparung (20), in die der Umfangsrand des Kopfes der Schraube (1) in der geschlossenen Position zum Eingriff kommen kann, und nahe an ihrem rückwärtigen Ende eine Außenfläche, die mit einer Vertiefung (23) versehen ist, in die ein elastischer Ring (24) eingreift, aufweisen.

3. Aufsatz nach einem der Ansprüche 1 und 2,
**dadurch gekennzeichnet, dass** die Außenfläche der Backen (M₁ bis M₃) in ihrem vorderen Teil einen bezüglich der Längsachse des Kopfes schrägen Teil (22) umfasst, wobei dieser schräge Teil (22) eine Rampe aufbaut, die mit dem vorderen Rand der Öffnung der Hülse (10) zusammenwirken, um das Ausklappen der Backen (M₁ bis M₃) in die geschlossene Position herbeizuführen.

4. Aufsatz nach einem der vorhergehenden Ansprüche,
**dadurch gekennzeichnet, dass** die Hülse (10) im Boden des Hohlraums eine ringförmige Erweiterung (G) beinhaltet, in die der Ring (24) nach elastischer Verformung teilweise eingreifen kann, um die bewegliche Gesamtheit bestehend aus der röhrenförmigen Manschette (19) und den Backen (M₁ bis M₃) in der Rückwärtslauf-Endposition zu verriegeln, wobei die Backen (M₁ bis M₃) sich nun in der geschlossenen Position befinden, wobei die Entriegelung erst erhalten wird, wenn auf die Backen (M₁ bis M₃) ein axialer Zug mit einer Amplitude ausgeübt wird, die ausreicht, damit der Ring (24) unter elastischer Verformung aus der Aussparung G herausspringen kann.

5. Aufsatz nach einem der vorhergehenden Ansprüche,
**dadurch gekennzeichnet, dass** der Kern (15) eine abgestufte zylindrische Form aufweist, die einen zylindrischen Teil (31) beinhaltet, auf dem die röhrenförmige Manschette (19) gleitet, wobei dieser zylindrische Teil (31) von einer Seite durch eine Schulter, die den Boden (11) des Hohlraums aufbaut, und von der anderen Seite durch einen zylindrischen Teil von größerem Durchmesser (27) begrenzt ist.

6. Aufsatz nach Anspruch 5,
**dadurch gekennzeichnet, dass** der Teil von größerem Durchmesser (27) aus dem Kopf einer Schraube (26) besteht, die sich in die axiale Gewindebohrung schraubt, die in dem Kern (15) realisiert ist.

7. Aufsatz nach einem der vorhergehenden Ansprüche,
**dadurch gekennzeichnet, dass** die Innenfläche der Hülse (10) Ausgestaltungen (17) beinhaltet, die dazu geeignet sind, mit den entsprechenden Ausgestaltungen der Kopfes der Schraube (1), die man einzuschrauben wünscht, in Eingriff zu kommen.

8. Aufsatz nach einem der vorhergehenden Ansprüche,
**dadurch gekennzeichnet, dass** die Innenfläche der Hülse (10) axiale Rillen beinhaltet, die zur Führung der Backen (M₁ bis M₃) dienen.

9. Aufsatz nach Anspruch 8,
**dadurch gekennzeichnet, dass** die Hülse (10) von der einen Seite durch einen Boden (11) verschlossen ist, der mit einem koaxialen Stab (12) aus einem Stück besteht, der dazu bestimmt ist, in den Dorn eines Schraubers einzugreifen, wobei dieser Boden Klauen beinhaltet, die in die oben genannten Rillen eingreifen.

10. Aufsatz nach einem Anspruch 5,
**dadurch gekennzeichnet, dass** der Teil von größerem Durchmesser des Kerns (15) so ausgestaltet ist, dass er mit einem Stempel (37) in Eingriff kommt, der auf dem Kopf von Schraube (35) ausgebildet ist.
